# EUROPÄISCHE PATENTSCHRIFT

(11) **EP 1 216 166 B1**
(45) Veröffentlichungstag und Bekanntmachung des Hinweises auf die Patenterteilung: **02.07.2003**
(21) Anmeldenummer: 00972614.2
(22) Anmeldetag: 28.09.2000
(51) Int. Cl.: B60R 16/02, H02J 1/10

(54) **VERFAHREN ZUR SICHEREN ANKOPPLUNG EINES FREMDSPANNUNGSNETZES AN EIN BETRIEBSSPANNUNGSNETZ UND SCHALTUNGSANORDNUNG ZUR DÜRCHFÜHRUNG DES VERFAHRENS**
METHOD FOR SECURE CONNECTION OF AN EXTERNAL POWER SUPPLY TO AN OPERATING POWER SUPPLY AND CIRCUIT LAYOUT FOR CARRYING OUT SAID METHOD
PROCEDE DE COUPLAGE SUR D'UN RESEAU DE TENSION EXTERIEUR A UN RESEAU DE TENSION DE FONCTIONNEMENT ET CIRCUIT POUR LA MISE EN OEUVRE DE CE PROCEDE

(30) Priorität: 29.09.1999 DE 19946733
(43) Veröffentlichungstag der Anmeldung: 26.06.2002
(73) Patentinhaber: TYCO Electronics Logistics AG, 9323 Steinach (CH)
(72) Erfinder: BRUCK, Jürgen, 12524 Berlin (DE); SAMRAY, Bican, 16321 Schönow (DE)
(74) Vertreter: Hirsch, Peter, Dipl.-Ing.
(86) Internationale Anmeldenummer: DE0003464
(87) Internationale Veröffentlichungsnummer: WO01023216

(56) Entgegenhaltungen:
- EP-A- 0 752 668
- DE-A- 3 110 365
- DE-A- 19 702 116
- DE-A- 19 719 919
- US-A- 4 609 829
- US-A- 4 869 688

## Beschreibung

Die Erfindung betrifft ein Verfahren zur sicheren Ankopplung eines Fremdspannungsnetzes an ein Betriebsspannungsnetz, insbesondere eines Kraftfahrzeuges. Außerdem betrifft die Erfindung eine Schaltungsanordnung zur Durchführung des Verfahrens.

Bei der Kopplung zweier Spannungsnetze gilt es, die Kompatibilität beider Spannungen zu beachten. Die Parameter der Spannungen sind ihr Betrag, ihre Polarität bei einer Gleichspannung und die Frequenz sowie die Phase bei einer Wechselspannung. Werden zwei Spannungsnetze miteinander gekoppelt, bei denen diese Kennwerte nicht übereinstimmen, so kann es zu Schäden in den Spannungsnetzen oder zu einem Betriebsausfall kommen.

Um Schäden zu vermeiden, ist es bekannt, Sicherungen in den Strompfad zu schalten, die bei einem unzulässig hohen Strom die Verbindung zwischen den Spannungsnetzen trennen. Solche Sicherungen schützen jedoch nicht vor zu hohen Spannungen.

Bei Kraftfahrzeugen tritt als weitere Schwierigkeit auf, daß in Zukunft verschiedene Spannungsebenen in den Bordnetzen von Kraftfahrzeugen eingesetzt werden. Dies stellt insbesondere dann ein Problem dar, wenn bei Ausfall der Batterie eines Fahrzeuges durch die Verbindung des Bordnetzes mit dem Bordnetz eines anderen Fahrzeuges Fremdstarthilfe gegeben wird, weil in diesem Fall die Gefahr besteht, verschiedenartige Bordnetze zusammenzuschalten.

Die DE 197 19 919 A1, die als nächstkommender Stand der Technik erachtet wird, offenbart eine Schaltungsanordnung zur sicheren Ankopplung einer Fremdeinspeisung (Starthilfebatterie) an ein Fahrzeugbordnetz, wobei eine Schalteinheit mit einem steuerbaren Schalter zwischen dem Bordnetz und einer Verbindungsklemme (Batterieklemme, an der die Starthilfebatterie anzuklemmen ist) angeordnet ist. Die Schalteinheit ist mit einem Steuergerät verbunden, und die Verbindungsklemme ist für den Anschluß der Fremdeinspeisung vorgesehen. Die an der Verbindungsklemme gegenüber dem Minuspol der Batterie oder Masse anliegenden Spannung wird gemessen, mit einem Spannungswert verglichen und auf der Grundlage des Vergleichsergebnisses die Schalteinheit angesteuert.

Die Aufgabe der Erfindung besteht nun darin, ein Verfahren anzugeben, das die sichere Ankopplung eines Fremdspannungsnetzes an ein Betriebsspannungsnetz, insbesondere eines Kraftfahrzeuges, gewährleistet, so daß eine Schädigung der Spannungsnetze verhindert ist.

Diese Aufgabe wird erfindungsgemäß durch ein Verfahren zur sicheren Ankopplung eines Fremdspannungsnetzes an ein Betriebsspannungsnetz, insbesondere eines Kraftfahrzeuges, gelöst, wobei eine Schalteinheit mit mindestens einem steuerbaren Schalter zwischen dem Betriebsspannungsnetz und einer Verbindungsklemme angeordnet ist, die Schalteinheit mit einem Steuergerät verbunden ist, die Verbindungsklemme für den Anschluß des Fremdspannungsnetzes ausgelegt ist, und wobei das Verfahren die folgenden Verfahrensmerkmale aufweist:
- Erzeugung einer pulsförmigen Spannung an der Verbindungsklemme zumindest bei geöffnetem Schalter,
- in den Pulspausen Messung der an der Verbindungsklemme anliegenden Spannung des angeschlossenen Fremdspannungsnetzes,
- Vergleich der Meßwerte mit der oder den Spannungen des Betriebsspannungsnetzes,
- auf der Grundlage der Vergleichsergebnisse Ansteuerung der Schalteinheit.

Außerdem soll eine Schaltungsanordnung zum Durchführen des Verfahrens angegeben werden.

Das Verfahren ist vorteilhaft, weil durch die pulsförmige Spannung sowohl einem an der Verbindungsklemme angeschlossenen Fremdspannungsnetz die Information über die eigene Spannung übermittelt wird, und gleichzeitig, d. h. während Pulspausen, die Spannung der Fremdspannungsquelle ermittelt werden kann.

Weiterhin ist vorteilhaft, daß nur bei einer durch einen Vergleich ermittelter Kompatibilität beider Spannungsnetze eine Verbindung zwischen diesen hergestellt wird. Günstig ist es, daß nicht nur bei einem Fehler die Verbindung verweigert wird, sondern optional auch zu verschiedenen Teilsystemen des Betriebsspannungsnetzes geschaltet werden kann. In einer günstigen Ausführungsform kann bei falscher Polarität des Fremdspannungsnetzes die Polung automatisch umgekehrt werden.

Vorteilhafterweise wird die Spannung an der Verbindungsklemme in mehreren Pulspausen ausgewertet, bevor, falls die Auswertergebnisse gleich ausfallen, der mindestens eine Schalter angesteuert wird. Dadurch erhöht sich die Fehlersicherheit des Systems.

Eine günstige Schaltungsanordnung zur Durchführung des Verfahrens ist so gestaltet, daß der steuerbare Schalter ein Relais ist.

Weiter Einzelheiten und Ausgestaltungen der Erfindung sind in den Unteransprüchen angegeben.

Die Erfindung wird nachfolgend an einem Ausführungsbeispiel anhand der Zeichnungen näher erläutert. Es zeigt
Figur 1 eine Darstellung des erfindungsgemäßen Verfahrens als Blockdiagramm,
Figur 2 den zeitlichen Verlauf der Puls- und Meßspannungen, wenn das Fremdspannungsnetz ebenfalls das erfindungsgemäße Vefahren einsetzt,
Figur 3 zeitliche Spannungsverläufe, wenn das Fremdspannungsnetz eine konstante Gleichspannung aufweist, und
Figur 4 eine Schaltungsanordnung zur Umsetzung des erfindungsgemäßen Verfahrens in einer Fahrzeugumgebung.

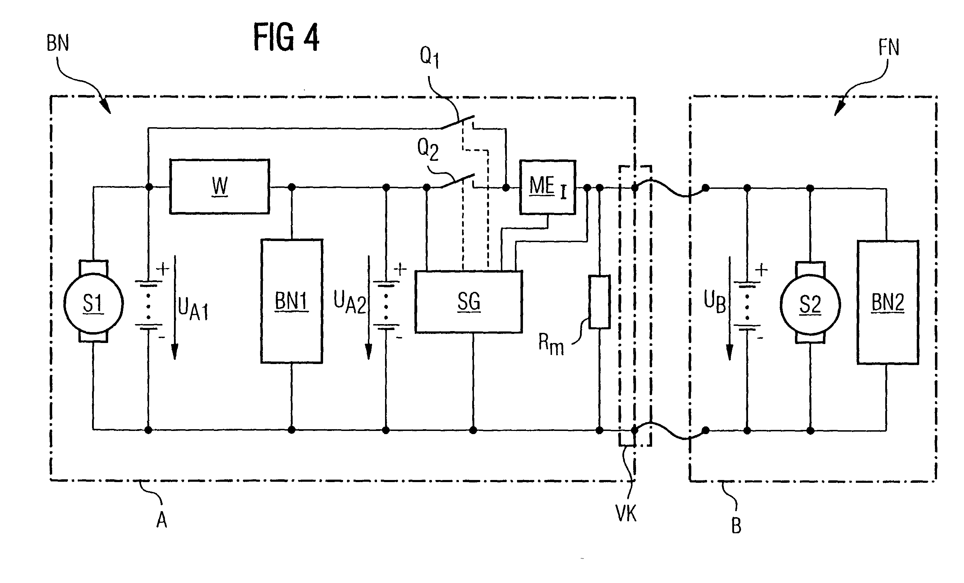

In der Figur 4 ist ein Anwendungsfall angegeben, bei dem ein Fremdspannungsnetz FN an ein Betriebsspannungsnetz BN anzukoppeln ist, wobei die beiden Netze die elektrischen Versorgungsnetze je eines Kraftfahrzeuges A und B sind. Das Betriebsspannungsnetz BN ist dabei das Netz des ersten Fahrzeuges A und das Fremdspannungsnetz FN das Netz des zweiten Fahrzeuges B. Während das Fahrzeug B ein konventionell ausgerüstetes Fahrzeug ist, bei dem ein Starterkabel direkt an die Bordspannung angeschlossen wird, enthält das Fahrzeug A ein Netz mit zwei verschiedenen Teilsystemen, die mit verschiedenen Betriebsspannungen arbeiten. Das erste Teilsystem weist einen Anlasser S1 und eine Batterie mit der Spannung U_{A1} auf. Das zweite Teilsystem besitzt ein übliches Bordnetz BN1 und eine Batterie mit der Spannung U_{A2}, die über einen Spannungswandler W mit dem ersten Teilsystem gekoppelt ist. Zudem besitzt das erste Fahrzeug A ein erfindungsgemäßes Steuergerät SG, das mit dem zweiten Teilsystem des Fahrzeuges A, der Verbindungsklemme VK sowie über Steuerleitungen mit zwei steuerbaren Schaltern Q₁ und Q₂ verbunden ist. Q₁ ist dabei zwischen der Verbindungsklemme und dem ersten Teilsystem angeordnet, Q₂ zwischen der Verbindungsklemme VK und dem zweiten Teilsystem. Zwischen zwei Anschlüssen der Verbindungsklemme VK ist ein Widerstand Rₘ geschaltet, der zu Meßzwecken dient. Das Fahrzeug B weist eine Batterie mit der Spannung U_{B}, einen Anlasser S2 sowie ein übliches Bordnetz BN2 auf. In den Strompfad zwischen den beiden Netzen BN und FN ist ein Strommesser ME_{I} geschaltet.

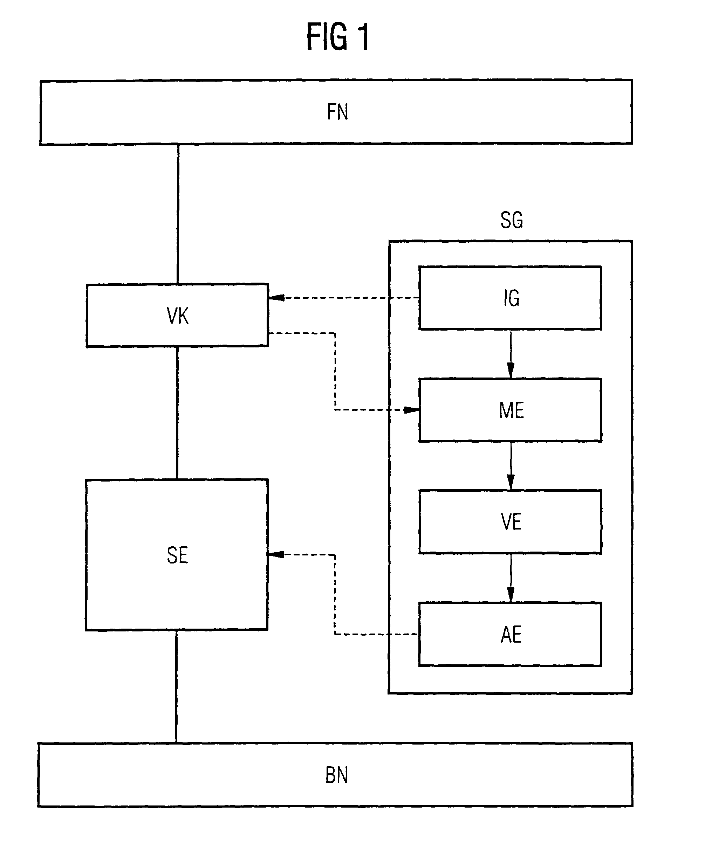

Das Steuergerät SG arbeitet nach dem in Figur 1 beschriebenen Verfahren. Anhand dieser Figur kann das erfindungsgemäße Verfahren in seiner allgemeinen Form erläutert werden. Ein Fremdspannungsnetz FN ist mit einer Verbindungsklemme VK verbunden. Eine Schalteinheit SE ist ebenfalls mit der Verbindungsklemme VK verbunden. Außerdem besteht eine Verbindung zwischen der Schalteinheit SE und dem Betriebsspannungsnetz BN. Ein Steuergerät SG setzt das erfindungsgemäße Verfahren um, indem es ein mit einem Impulsgenerator IG erzeugtes Signal auf die Verbindungsklemme VK gibt. Bei diesem Signal handelt es sich um eine pulsförmige Spannung, deren Amplitude eine Information über die Spannung des Betriebsspannungsnetzes BN enthält.

Eine Meßeinrichtung ME des Steuergerätes SE überwacht kontinuierlich die Spannung an der Verbindungsklemme VK und mißt in den Pulspausen die dort anliegende Spannung. Eine Vergleichseinrichtung VE des Steuergeräts SG vergleicht die Meßergebnisse der Meßeinrichtung ME mit den gemessenen oder gespeicherten Spannungen des Betriebsspannungsnetzes BN. Dabei muß das Betriebsspannungsnetz BN nicht eine einheitliche Spannung aufweisen, sondern kann aus Teilsystemen verschiedener Spannungen bestehen. Anhand des Vergleichsergebnisses führt die Ansteuereinrichtung AE die Ansteuerung der Schalteinheit SE durch.

Die durch den Impulsgenerator IG erzeugte pulsförmige Spannung bewirkt, daß eine geeignete Meßeinrichtung des an die Verbindungsklemme VK angeschlossenen Fremdspannungsnetzes FN erkennen kann, welche Spannung das Betriebsspannungsnetz BN benutzt. Anhand der in den Pulspausen gemessenen Spannung erkennt die Vergleichseinrichtung VE, ob eine Spannungskompatibilität zwischen dem Fremdspannungsnetz FN und dem Betriebsspannungsnetz BN besteht. Der Vergleich der Meßspannungen mit den Vergleichswerten kann sich sowohl auf den Betrag der Spannung, als auch auf die Polarität oder die Frequenz bzw. Phase erstrecken. Die Schalteinheit SE kann aus einem oder mehreren steuerbaren Schaltern bestehen. Die Anzahl der Schalter hängt davon ab, ob beispielsweise nur bei Inkompatibilität der Spannungsnetze die Verbindung getrennt bleiben soll, oder ob das Fremdspannungsnetz FN mit einem von mehreren Teilsystemen des Betriebsspannungsnetzes BN gekoppelt werden soll. Zusätzliche Schalter oder zusätzliche Kontakte bei den vorhandenen Schaltern, so daß Umschalter gebildet sind, sind erforderlich, wenn bei unterschiedlicher Polarität des Fremdspannungsnetzes FN und des Betriebsspannungsnetzes BN dies automatisch korrigiert werden soll.

In einer Weiterbildung der Erfindung (vgl. Figur 4) besitzt das Steuergerät SG einen Anschluß für einen Kurzschlußdetektor, so daß im Falle eines Kurzschlusses dieser erkannt wird und durch die Schalteinheit SE die Verbindung zwischen dem Fremdspannungsnetz FN und dem Betriebsspannungsnetz BN aufgetrennt werden kann. Die Funktion des Kurzschlußdetektors kann ein Strommesser ME_{I} übernehmen, der in den Strompfad zwischen den Spannungsnetzen geschaltet ist. Zusätzlich kann durch die Messung des Stromes durch den Strommesser ME_{I} das Ende eines Ladevorgangs bestimmt werden, nämlich wenn der Strom zwischen den Spannungsnetzen unter einen bestimmten Schwellwert fällt.

Nach der Trennung einer Verbindung wird weiterhin die Klemmenspannung gemessen, jedoch wird verhindert, daß der oder die Schalter wieder geschlossen werden, auch wenn die Klemmenspannung im zulässigen Bereich liegt. Erst wenn die Spannung an der Verbindungsklemme VK auf Null oder unter einen Schwellwert abfällt, das heißt, wenn das Starterkabel SK von der Verbindungsklemme VK gelöst wird, kehrt das Schaltgerät SG in den Normalzustand zurück. Diese optionale Verriegelung, die eine Erweiterung des erfindungsgemäßen Verfahrens darstellt, ist eine zusätzliche Sicherheitsmaßnahme, die ein sofortiges Wiedereinschalten nach dem Auftreten eines Fehlers verhindert.

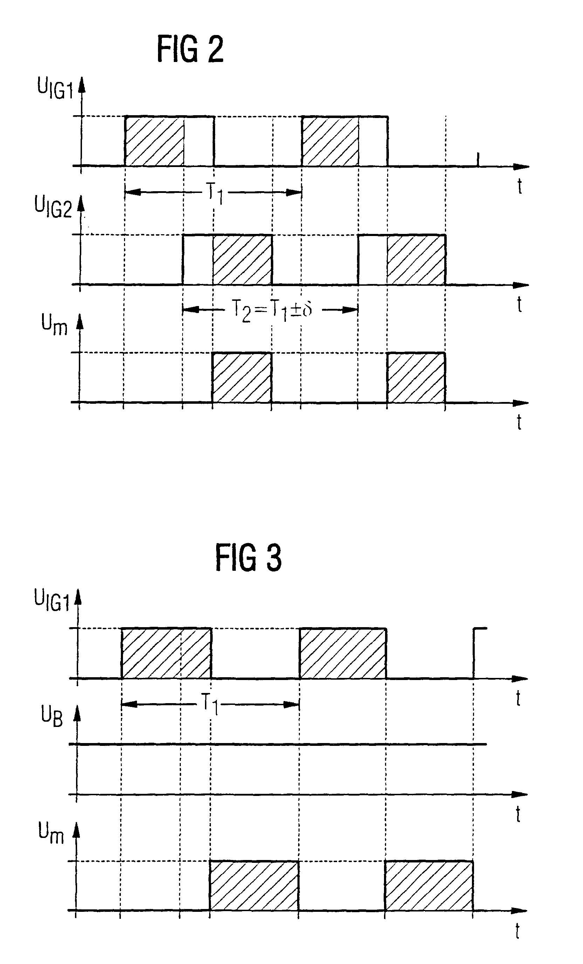

Die Figur 2 veranschaulicht den Zusammenhang zwischen pulsförmigen Spannungen, wobei die Spannung U_{IG1} von dem Impulsgenerator eines ersten Steuergerätes und U_{IG2} von dem Impulsgenerator eines zweiten erzeugt wird, und der an der Verbindungsklemme VK gemessenen Spannung Uₘ. Der hier beschriebene Fall ist ein Beispiel, wenn beide Netze mit dem gleichen Verfahren zur sicheren Ankopplung ausgerüstet sind. Die Periodendauer T₁ der Impulsspannung U_{IG1} des ersten Impulsgenerators ist ungefähr gleich der Periodendauer T₂ der Impulsspannung U_{IG2} des zweiten Impulsgenerators. Sie unterscheiden sich in der Regel um einen Wert δ, der dadurch entsteht, daß die verwendeten Bauteile fertigungsbedingte Toleranzen aufweisen. Somit verschiebt sich die Lage der Impulse beider Spannungen zueinander, d. h. es besteht eine Phasenverschiebung, die sich aufgrund der unterschiedlichen Periodendauer ständig ändert. In den Pulspausen von U_{IG1} wird die Spannung U_{IG2} gemessen. Für das Steuergerät des ersten Netzes ergibt sich somit eine Meßspannung, wie in der untersten Kurve in Figur 2 dargestellt ist. Je nach Phasenverschiebung ändert sich die Breite der gemessenen Pulse, jedoch nicht ihre Amplitude. Im Extremfall, wenn die beiden Pulsspannungen U_{IG1} und U_{IG2} in Phase sind, wird in der Pulspause von U_{IG1} nur der Wert Null gemessen, d. h. die Meßspannung Uₘ verschwindet. Im anderen Extremfall, wenn die Spannungen U_{IG1} und 1 U_{IG2} um 180° phasenverschoben sind, entspricht die Pulsdauer der Meßspannung Uₘ der Dauer der Pulspause von U_{IG1}. Wenn an der Verbindungsklemme VK kein zweites Netz angeschlossen ist, so verschwindet U_{IG2}, daher ist dann die Meßspannung Uₘ ebenfalls gleich Null. In einem weiteren Betriebsfall ist an der Verbindungsklemme VK ein Netz angeschlossen, das eine konstante Gleichspannung aufweist. In diesem Fall sind die Meßpulse Uₘ so lang wie die Dauer einer Pulspause von U_{IG1} (Figur 3). Auf diese Weise ist für die Detektion der Spannung des Netzes 2 nur die Amplitude der Meßspannung Uₘ herangezogen. Die Durchführung der Messung in den Pulspausen ist dahingehend zu verstehen, daß die Meßspannung nur in den Pulspausen ausgewertet wird. Ob die Messung durchgehend erfolgt oder nur in den Pausen, ist für die Erfindung ohne Bedeutung.

Die Schalthandlungen, wie sie im konkreten Anwendungsfall gemäß der Figur 4 durchgeführt werden, sind im folgenden zusammengefaßt. Wenn das Netz des Fahrzeuges B nicht an die Verbindungsklemme VK angeschlossen ist, so wird auch keine Spannung U_{VK} an der Verbindungsklemme gemessen, was zur Folge hat, daß die Schalter Q₁ und Q₂ geöffnet sind. Bei Anschluß des Netzes von Fahrzeug B liegt dessen Spannung an den beiden Polen der Verbindungsklemme VK, d. h. U_{VK} ist gleich U_{B}. Für die Verbindung zweier Fahrzeugnetze müssen die beiden Spannungen nicht identisch sein, aber sie dürfen nicht zu stark voneinander abweichen; d. h. das Steuergerät SG prüft, ob die Spannung U_{B} in einem gewissen Spannungsbereich liegt, der entweder zu der Spannung des ersten Teilsystems U_{A1} oder der des zweiten Teilsystems U_{A2} paßt. Die Spannungen U_{A1}, U_{A2} und U_{B} sind dabei Gleichspannungen. Wenn die Spannung U_{B} nach Betrag und Polarität gleich der Spannung U_{A1} ist, so wird Q₁ geschlossen und Q₂ offen gehalten. Ist der Betrag von U_{B} gleich dem von U_{A1}, aber umgekehrter Polarität, so bleiben beide Schalter geöffnet bzw. werden geöffnet, da eine automatische Korrektur der Polarität in diesem Ausführungsbeispiel nicht vorgesehen ist. Entspricht die Spannung U_{B} der Spannung U_{A1} so wird Q₁ geöffnet und Q₂ geschlossen. Durch den Spannungswandler W wird sichergestellt, daß durch das Fremdspannungsnetz FN, das eine andere Spannung als die Batterie mit der Spannung U_{A1} aufweist, trotzdem die Batterie mit der Spannung U_{A1} aufgeladen wird. Im Falle gleichen Spannungsbetrages, aber unterschiedlicher Polarität, werden wiederum beide Schalter Q₁ und Q₂ geöffnet. In allen anderen Fällen, insbesondere wenn die Spannung U_{B} nicht an der Verbindungsklemme VK anliegt, d. h. die Spannung an der Verbindungklemme (in den Impulspausen) Null ist, bleiben beide Schalter geöffnet. Die Betriebszustände sind dabei in der folgenden Tabelle zusammengefaßt:

| | Q₁ | Q₂ |
|---|---|---|
| U_{VK} = U_{B} = U_{A1} | geschlossen | offen |
| U_{VK} = U_{B} = -U_{A1} | offen | offen |
| U_{VK} = U_{B} = U_{A2} | offen | geschlossen |
| U_{VK} = U_{B} = -U_{A2} | offen | offen |
| sonst | offen | offen |
| U_{VK} = 0 | offen | offen |

Bei der Kopplung von Wechselspannungsnetzen fällt die Schaltungsanordnung komplexer aus. Neben dem Spannungsbetrag bzw. der Spannungsamplitude muß die Frequenz und die Phasenlage berücksichtigt werden. Statt eines Gleichspannungswandlers können hierbei Transformatoren zum Einsatz kommen. Auch ist es denkbar, daß DC/AC-Wandler bzw. AC/DC-Wandler verwendet werden. Bei der Kopplung von Drehstromnetzen ist zudem die Phasenfolge der drei Leiter zu berücksichtigen. Das erfindungsgemäße Verfahren zur Ankopplung bleibt aber in allen Fällen das gleiche, lediglich die Schaltungsanordnung muß um entsprechende Komponenten ergänzt werden.

## Patentansprüche

1. Verfahren zur sicheren Ankopplung eines Fremdspannungsnetzes an ein Betriebsspannungsnetz, insbesondere eines Kraftfahrzeuges,
wobei eine Schalteinheit (SE) mit mindestens einem steuerbaren Schalter (Q₁, Q₂) zwischen dem Betriebsspannungsnetz (BN) und einer Verbindungsklemme (VK) angeordnet ist, die Schalteinheit (SE) mit einem Steuergerät (SG) verbunden ist, die Verbindungsklemme (VK) für den Anschluß des Fremdspannungsnetzes (FN) ausgelegt ist, und
wobei das Verfahren die folgenden Verfahrensmerkmale aufweist:
- Erzeugung einer pulsförmigen Spannung (U_{IG1}) an der Verbindungsklemme (VK) zumindest bei geöffnetem Schalter/ geöffneten Schaltern (Q₁, Q₂),
- in den Pulspausen Messung der an der Verbindungsklemme (VK) anliegenden Spannung des angeschlossenen Fremdspannungsnetzes (FN),
- Vergleich der Meßwerte mit der oder den Spannungen des Betriebsspannungsnetzes (BN),
- auf der Grundlage der Vergleichsergebnisse Ansteuerung der Schalteinheit (SE).

2. Verfahren nach Anspruch 1,
**dadurch gekennzeichnet,**
**daß** die Spannung des Fremdspannungsnetzes ebenfalls pulsförmig ist.

3. Verfahren nach Anspruch 1,
**dadurch gekennzeichnet,**
**daß** das Steuergerät (SG) je nach gemessener Spannung an der Verbindungsklemme (VK) die Schalteinheit (SE) derart ansteuert, daß die Verbindungsklemme (VK) mit einem Betriebspannungsnetz-Teilsystem gleicher Spannung verbunden wird oder die Verbindung getrennt bleibt.

4. Verfahren nach Anspruch 1,
**dadurch gekennzeichnet,**
**daß** das Steuergerät (SG) je nach gemessener Spannung an der Verbindungsklemme (VK) die Schalteinheit (SE) derart ansteuert, daß die Verbindungsklemme (VK) mit einer Batterie gleicher Spannung verbunden wird.

5. Verfahren nach Anspruch 1,
**dadurch gekennzeichnet,**
**daß** das Steuergerät (SG) je nach gemessener Spannung an der Verbindungsklemme (VK) die Schalteinheit (SE) derart ansteuert, daß die Verbindungsklemme (VK) mit einem Spannungswandler (W) verbunden wird.

6. Verfahren nach Anspruch 1,
**dadurch gekennzeichnet,**
**daß** bei Inkompatibilität der Spannungen des Betriebsspannungsnetzes (BN) und des Fremdspannungsnetzes (FN) die Verbindungsklemme (VK) von dem Betriebsspannungsnetz (BN) getrennt bleibt.

7. Verfahren nach Anspruch 6,
**dadurch gekennzeichnet,**
**daß** bei umgekehrter Polung der Spannungen des Betriebsspannungsnetzes (BN) und des Fremdspannungsnetzes (FN) das Steuergerät (SG) die Schalteinheit (SE) so steuert, daß die Polungen der Spannungen des Betriebsspannungsnetzes (BN) und des Fremdspannungsnetzes (FN) übereinstimmen.

8. Verfahren nach Anspruch 1,
**dadurch gekennzeichnet,**
**daß** das Steuergerät (SG) mindestens einen Spannungsbereich vorgibt, in dem bzw. in denen die Spannung des Fremdspannungsnetzes (FN) liegen muß, damit das Steuergerät (SG) eine verbindende Schalthandlung auslöst.

9. Verfahren nach Anspruch 1,
**dadurch gekennzeichnet,**
**daß** die Spannung an der Verbindungsklemme (VK) in mehreren Pulspausen ausgewertet wird, bevor bei gleichen Auswertergebnissen die Schalteinheit (SE) angesteuert wird.

10. Schaltungsanordnung zum Durchführen des Verfahrens nach einem der Ansprüche 1 bis 9.

11. Schaltungsanordnung nach Anspruch 10,
**dadurch gekennzeichnet,**
**daß** der mindestens eine steuerbare Schalter (Q₁, Q₂) ein Relais ist.

12. Schaltungsanordnung nach Anspruch 10 oder 11,
**dadurch gekennzeichnet,**
**daß** das Betriebsspannungsnetz (BN) das Bordnetz eines ersten Kraftfahrzeuges ist und daß das Fremdspannungsnetz das Bordnetz eines zweiten Kraftfahrzeuges ist.

13. Schaltungsanordnung nach Anspruch 10,
**dadurch gekennzeichnet,**
**daß** das Steuergerät (SG) einen Impulsgenerator (IG) mit großem Innenwiderstand besitzt, der die pulsförmige Spannung erzeugt.

14. Schaltungsanordnung nach Anspruch 10,
**dadurch gekennzeichnet,**
**daß** zwischen zwei Anschlüssen der Verbindungsklemme (VK) ein Meßwiderstand (Rm) geschaltet ist.

15. Schaltungsanordnung nach Anspruch 10,
**dadurch gekennzeichnet,**
**daß** das Steuergerät (SG) einen Anschluß für einen Kurzschlußdetektor (ME_{I}) besitzt.

## Claims

1. A method for the safe coupling of an external voltage network to an operating voltage network, in particular of a motor vehicle,
a switching unit (SE) with at least one controllable switch (Q₁, Q₂) being arranged between the operating voltage network (BN) and a connecting terminal (VK), the switching unit (SE) being connected with a control device (SG), the connecting terminal (VK) being designed for connection of the external voltage network (FN), and the method comprising the following method features:
generation of a pulse-shaped voltage (U_{IG1}) at the connecting terminal (VK) at least when the switch(es) (Q₁, Q₂) is/are open,
measurement in the pulse intervals of the voltage of the connected-up external voltage network (FN) applied to the connecting terminal (VK),
comparison of the measured values with the voltage(s) of the operating voltage network (BN),
activation of the switching unit (SE) on the basis of the comparison results.

2. A method according to claim 1,
**characterised in that**
the voltage of the external voltage network is likewise pulse-shaped.

3. A method according to claim 1,
**characterised in that**,
depending on the voltage measured at the connecting terminal (VK), the control device (SG) activates the switching unit (SE) in such a way that the connecting terminal (VK) is connected with an operating voltage network subsystem of the same voltage or the connection remains unmade.

4. A method according to claim 1,
**characterised in that**,
depending on the voltage measured at the connecting terminal (VK), the control device (SG) activates the switching unit (SE) in such a way that the connecting terminal (VK) is connected with a battery of the same voltage.

5. A method according to claim 1,
**characterised in that**
depending on the voltage measured at the connecting terminal (VK), the control device (SG) activates the switching unit (SE) in such a way that the connecting terminal (VK) is connected with a voltage transformer (W).

6. A method according to claim 1,
**characterised in that**,
in the event of incompatibility of the voltages of the operating voltage network (BN) and the external voltage network (FN), the connecting terminal (VK) remains disconnected from the operating voltage network (BN).

7. A method according to claim 6,
**characterised in that**,
in the event of reversed polarity of the voltages of the operating voltage network (BN) and the external voltage network (FN), the control device (SG) controls the switching unit (SE) in such a way that the polarities of the voltages of the operating voltage network (BN) and the external voltage network (FN) match.

8. A method according to claim 1,
**characterised in that**
the control device (SG) predetermines at least one voltage range within which the voltage of the external voltage network (FN) must lie, so that the control device (SG) initiates a connecting switching operation.

9. A method according to claim 1,
**characterised in that**
the voltage at the connecting terminal (VK) is evaluated in a plurality of pulse intervals, before the switching unit (SE) is activated in the event of identical evaluation results.

10. A circuit arrangement for performing the method according to one of claims 1 to 9.

11. A circuit arrangement according to claim 10,
**characterised in that**
the at least one controllable switch (Q₁, Q₂) is a relay.

12. A circuit arrangement according to claim 10 or 11,
**characterised in that**
the operating voltage network (BN) is the on-board network of a first motor vehicle and **in that** the external voltage network is the on-board network of a second motor vehicle.

13. A circuit arrangement according to claim 10,
**characterised in that**
the control device (SG) has a pulse generator (IG) with large internal resistance, which generates the pulse-shaped voltage.

14. A circuit arrangement according to claim 10,
**characterised in that**
a measuring resistor (Rm) is connected between two connections of the connecting terminal (VK).

15. A circuit arrangement according to claim 10,
**characterised in that**
the control device (SG) has a connection for a short circuit detector (ME₁).

## Revendications

1. Procédé de couplage sûr d'un réseau de tension extérieur à un réseau de tension de service, en particulier dans un véhicule automobile,
une unité de commutation (SE) comportant au moins un interrupteur à commande (Q₁, Q₂) étant agencé entre le réseau de tension de service (BN) et une borne de raccordement (VK), l'unité de commutation (SE) étant raccordée à un dispositif de commande (SG), la borne de raccordement (VK) servant au raccordement du réseau de tension extérieur (FN), le procédé englobant les caractéristiques du procédé ci-dessous:
production d'une tension sous forme d'impulsions (U_{IG1}) sur la borne de raccordement (VK), au moins lors de l'ouverture de l'interrupteur/des interrupteurs (Q₁, Q₂),
mesure, pendant les intervalles entre les impulsions, de la tension du réseau de tension extérieur raccordé (FN) appliquée à la borne de raccordement (VK),
comparaison des valeurs de mesure avec la tension ou les tensions du réseau de tension de service (BN),
actionnement de l'unité de commutation (SE) sur la base des résultats de la comparaison.

2. Procédé selon la revendication 1,
**caractérisé en ce que**
la tension du réseau de tension extérieur est aussi une tension sous forme d'impulsions.

3. Procédé selon la revendication 1,
**caractérisé en ce que**
le dispositif de commande (SG) actionne l'unité de commutation (SE), en fonction de la tension mesurée sur la borne de raccordement (VK), de sorte que la borne de raccordement (VK) est reliée à un système partiel du réseau de tension de service ayant la même tension ou que la liaison n'est pas effectuée.

4. Procédé selon la revendication 1,
**caractérisé en ce que**
en fonction de la tension mesurée sur la borne de commande (VK), le dispositif de commande (SG) actionne l'unité de commutation (SE) de sorte que la borne de raccordement (VK) est reliée avec une batterie de tension identique.

5. Procédé selon la revendication 1,
**caractérisé en ce que**
en fonction de la tension mesurée sur la borne de raccordement (VK), le dispositif de commande (SG) actionne l'unité de commutation (SE) de sorte que la borne de raccordement (VK) est reliée avec un transformateur de tension (W).

6. Procédé selon la revendication 1,
**caractérisé en ce que**
en présence d'une incompatibilité des tensions du réseau de tension de service (BN) et du réseau de tension extérieur (FN), la borne de raccordement (VK) reste séparée du réseau de tension de service (BN).

7. Procédé selon la revendication 6,
**caractérisé en ce que**
en présence d'une polarisation inverse des tensions du réseau de tension de service (BN) et du réseau de tension extérieur (FN), le dispositif de commande (SG) actionne l'unité de commutation (SE) de sorte que les polarités des tensions du réseau de tension de service (BN) et du réseau de tension extérieur (FN) concordent.

8. Procédé selon la revendication 1,
**caractérisé en ce que**
le dispositif de commande (SG) détermine au moins un intervalle de tensions, dans lequel ou dans lesquels doit se situer la tension du réseau de tension extérieur (FN) pour que le dispositif de commande (SG) déclenche une action de commutation de raccordement.

9. Procédé selon la revendication 1,
**caractérisé en ce que**
la tension appliquée à la borne de raccordement (VK) est évaluée pendant plusieurs intervalles entre les impulsions, avant l'actionnement de l'unité de commutation (SE) en présence de résultats d'évaluation égaux.

10. Circuit pour la mise en pratique du procédé selon l'une des revendications 1 à 9.

11. Circuit selon la revendication 10,
**caractérisé en ce que**
le au moins un interrupteur à commande (Q₁, Q₂) est un relais.

12. Circuit selon les revendications 10 ou 11,
**caractérisé en ce que**
le réseau de tension de service (BN) constitue le réseau de bord d'un premier véhicule, le réseau de tension extérieur constituant le réseau de bord d'un deuxième véhicule.

13. Circuit selon la revendication 10,
**caractérisé en ce que**
le dispositif de commande (SG) comporte un générateur d'impulsions (IG) à résistance interne élevée, produisant la tension sous forme d'impulsions.

14. Circuit selon la revendication 10,
**caractérisé en ce que**
une résistance de mesure (Rm) est agencée entre les deux raccordements de la borne de raccordement (VK).

15. Circuit selon la revendication 10,
**caractérisé en ce que**
le dispositif de commande (SG) comporte un raccordement pour un détecteur de court-circuit (ME₁).
